# EUROPEAN PATENT SPECIFICATION

(11) **EP 2 612 006 B1**
(45) Date of publication and mention of the grant of the patent: **10.12.2014**
(21) Application number: 11770830.5
(22) Date of filing: 19.07.2011
(51) Int. Cl.: F02B 37/007, F02B 37/013, F01N 3/20

(54) **EXHAUST SYSTEM AND METHOD FOR SELECTIVE CATALYTIC REDUCTION**
ABGASSYSTEM UND VERFAHREN ZUR SELEKTIVEN KATALYTISCHEN REDUKTION (SCR)
SYSTEME D'ECHAPPEMENT ET PROCÉDÉ CATALYTIQUE DE REDUCTION SELECTIVE (SCR)

(30) Priority: 30.08.2010 FI 20105895
(43) Date of publication of application: 10.07.2013
(73) Proprietor: Wärtsilä Finland Oy, 65380 Vaasa (FI)
(72) Inventor: HYVÖNEN, Jari, 65450 Solf (FI); RAIKIO, Tero, 65230 Vaasa (FI); WIDJESKOG, Klaus, 65730 Jungsund (FI)
(74) Representative: Berggren Oy Ab
(86) International application number: PCT/FI2011/050665
(87) International publication number: WO 2012/028768

(56) References cited:
- DE-A1-102004 027 593
- DE-A1-102008 017 280
- US-A- 5 528 902

## Description

### Technical field of the invention

The present invention relates to an exhaust system for an internal combustion engine, as defined in the preamble of claim 1. The invention also concerns a selective catalytic reduction method in accordance with the preamble of claim 7.

### Background of the invention

Nitrogen oxide (NOx) emissions of internal combustion engines in ships and power plants are a growing concern and subject to continuously tightening regulations set by the International Maritime Organization (IMO) and other legislative bodies. To a certain extent, the requirements set by different regulations can be met by means that are directly related to the operation of the engine, such as exhaust gas recirculation, high fuel injection pressures in diesel engines, water injection into the air intake duct etc. However, many engine-related measures for reducing NOx emissions have a negative effect on the fuel efficiency, and they are not adequate for meeting the most stringent emission limits. For ultimate NOx reduction, selective catalytic reduction (SCR) is needed. With the SCR, NOx reductions of up to 90% or even greater can be achieved.

In an SCR system as disclosed in DE 102004027593 A1, a catalyst material and a reducing agent are used to decompose the NOx formed during the combustion back to the basic elements. The catalyst is arranged on the surface of a supporting ceramic material forming a honeycomb structure inside a reactor. On the surface of the catalyst, the NOx reacts with ammonia that is used as the reducing agent and nitrogen and water is formed. In practice, urea is often used instead of ammonia for safety reasons. This applies especially to the marine applications, where leaking ammonia is a serious hazard. Urea is injected into the exhaust gas flow in a water solution. Due to the high temperature of the exhaust gas, water evaporates and the urea molecules break up into ammonia and carbon dioxide.

For effective NOx reduction and minimized usage of urea, as well as for minimum ammonia slip through the SCR system, effective mixing of the urea with the exhaust gas flow is essential. In prior art solutions, sufficient mixing has typically been ensured by arranging a sufficiently long exhaust duct section between the point of urea injection and the catalytic converter. If the distance between the injection point and the catalytic converter is long enough, good mixing results can be achieved. However, this sets limitations for the construction of the exhaust system. In addition, if the catalytic converter is placed far from the engine, low temperature of the exhaust gases may have a negative effect on the functioning of the catalytic converter.

### Summary of the invention

The object of the present invention is to provide an improved exhaust system that facilitates good mixing of the reducing agent with the exhaust gas. Another object of the present invention is to provide an improved method for selective catalytic reduction. The characterizing features of the system and the method are given in the characterizing parts of claims 1 and 7, respectively.

According to the present invention, an exhaust system for an internal combustion engine comprises a high-pressure turbocharger comprising a turbine, a low-pressure turbocharger comprising a turbine being arranged downstream from the turbine of the high-pressure turbocharger with respect to the direction of the exhaust gas flow, means for connecting the turbine inlet of the high-pressure turbocharger to a group of cylinders of the engine, a catalytic converter for selective catalytic reduction, and means for introducing reducing agent into the exhaust system. The exhaust system further comprises means for connecting the turbine outlet of the high-pressure turbocharger to an inlet of the catalytic converter, and means for connecting an outlet of the catalytic converter to the turbine inlet of the low-pressure turbocharger. The means for introducing reducing agent into the exhaust system are arranged upstream from the turbine of the high-pressure turbocharger.

According to the present invention, in a method for selective catalytic reduction in an exhaust system of an internal combustion engine, which exhaust system comprises a high-pressure turbocharger comprising a turbine, and a low-pressure turbocharger comprising a turbine being arranged downstream from the turbine of the high-pressure turbocharger with respect to the direction of the exhaust gas flow, the reducing agent is introduced into the system upstream from the turbine of the high-pressure turbocharger, and the selective catalytic reduction takes place downstream from the turbine of the high-pressure turbocharger and upstream from the turbine of the low-pressure turbocharger.

Since the means for introducing reducing agent into the exhaust system are arranged upstream from the high-pressure turbocharger and the catalytic converter is arranged downstream from the high-pressure turbocharger, reducing agent flows through the turbine of the high-pressure turbocharger before entering the catalytic converter. Reducing agent is thus very effectively mixed with exhaust gas without a need for a long exhaust duct section before the catalytic converter. This allows construction of a compact exhaust system. The placement of the catalytic converter between the turbochargers ensures that the exhaust gas temperature is high enough for selective catalytic reduction.

According to an embodiment of the present invention, the exhaust system comprises a second high-pressure turbocharger comprising a turbine, a second low-pressure turbocharger comprising a turbine being arranged downstream from the turbine of the second high-pressure turbocharger with respect to the direction of the exhaust gas flow, means for connecting the turbine inlet of the second high-pressure turbocharger to a second group of cylinders of the engine, means for connecting the turbine outlet of the second high-pressure turbocharger to an inlet of a catalytic converter, means for connecting an outlet of the catalytic converter to the turbine inlet of the second low-pressure turbocharger, and second means for introducing reducing agent into the exhaust system upstream from the turbine of the second high-pressure turbocharger. This embodiment of the invention is suitable for V-engines, where both banks of the engine are provided with their own exhaust manifolds and turbochargers.

According to another embodiment of the invention, the system comprises an exhaust module comprising a high-pressure exhaust duct for connecting an exhaust manifold of the engine to the turbine inlet of the high-pressure turbocharger, a mixing duct for connecting the turbine outlet of the high-pressure turbocharger to an inlet of the catalytic converter, and a low-pressure exhaust duct for connecting an outlet of the catalytic converter to the turbine inlet of the low-pressure turbocharger, the ducts of the exhaust module being integral with each other. The exhaust module is advantageous since it enables a compact size of the exhaust system and reduced assembly time. With the exhaust module heat transfer properties of the exhaust system can also be optimized.

According to another embodiment of the invention, the exhaust module comprises a second high-pressure exhaust duct for connecting a second exhaust manifold of the engine to the turbine inlet of a second high-pressure turbocharger, a second mixing duct for connecting the turbine outlet of a second high-pressure turbocharger to an inlet of a catalytic converter, and a second low-pressure exhaust duct for connecting an outlet of the catalytic converter to the turbine inlet of a second low-pressure turbocharger. This kind of exhaust module is suitable for V-engines.

According to another embodiment of the invention, the exhaust module is a one-piece cast.

According to an embodiment of the invention, the means for introducing reducing agent into the exhaust system are arranged in the exhaust module.

### Brief description of the drawings

Fig. 1 shows schematically an embodiment of the exhaust system according to the present invention.
Fig. 2 shows schematically another embodiment of the exhaust system.
Fig. 3 shows an exhaust module according to an embodiment of the invention.
Fig. 4 shows the exhaust module of Fig. 3 from another angle.

### Detailed description of the invention

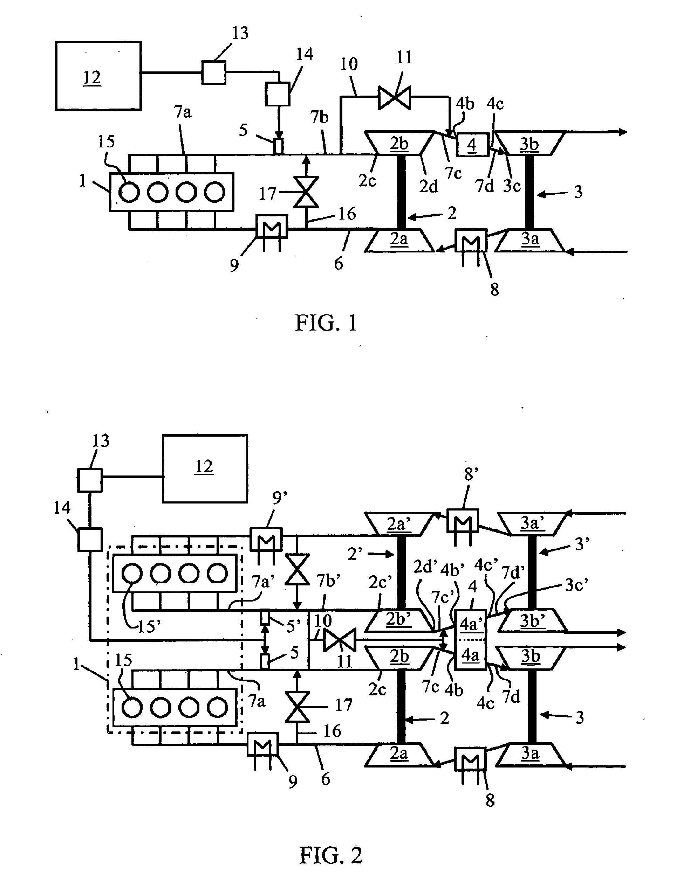

The invention is now described in more detail with reference to the accompanying drawings. In Fig. 1 is shown an internal combustion engine 1 with two-stage turbo-charging. A high-pressure turbocharger 2 is connected in series with a low-pressure turbocharger 3. Both turbochargers 2, 3 comprise a compressor 2a, 3a and a turbine 2b, 3b.

An exhaust manifold 7a connects the cylinders 15 of the engine 1 to a high-pressure exhaust duct 7b, which is connected to the turbine inlet 2c of the high-pressure turbocharger 2. Exhaust gases from the engine 1 flow in the exhaust manifold 7a and in the high-pressure exhaust duct 7b from the engine 1 to the turbine 2b of the high-pressure turbocharger 2. A catalytic converter 4 for selective catalytic reduction is located between the turbine 2b of the high-pressure turbocharger 2 and the turbine 3b of the low-pressure turbocharger 3. The catalytic converter 4 comprises one or more SCR elements. The SCR elements are ceramic honeycomb structures that are coated with a catalyst material. On the surface of the SCR elements, the reducing agent reacts with NOx and nitrogen and water is formed. The catalytic converter 4 can also comprise an oxidation catalyst for oxidizing carbon monoxide and unburned hydrocarbons. In case of ammonia slip, also at least part of the excess ammonia is oxidized by the oxidation catalyst.

A mixing duct 7c connects the turbine outlet 2d of the high-pressure turbocharger 2 to the inlet 4b of the catalytic converter 4. A low-pressure exhaust duct 7d connects the outlet 4c of the catalytic converter 4 to the turbine inlet 3c of the low-pressure turbocharger 3.

An air intake duct 6 is provided for introducing intake air into the cylinders 15 of the engine 1. Four cylinders 15 are shown in Fig. 1, but the engine 1 can comprise any number of cylinders 15. The intake air goes first through the compressor 3a of the low-pressure turbocharger 3 and then through the compressor 2a of the high-pressure turbocharger 2. A low-pressure charge air cooler 8 is arranged between the compressor 3a of the low-pressure turbocharger 3 and the compressor 2a of the high-pressure turbocharger 2. A high-pressure charge air cooler 9 is arranged between the compressor 2a of the high-pressure turbocharger 2 and the engine 1. Between the air intake duct 6 and the high-pressure exhaust duct 7b there is a by-pass duct 16, which is provided with a by-pass valve 17 for regulating the intake air flow through the by-pass duct 16.

The exhaust system also comprises a wastegate 10, which connects the high-pressure exhaust duct 7b to the mixing duct 7c. The wastegate 10 is provided with a wastegate valve 11 for regulating the exhaust gas flow in the wastegate 10.

The urea solution is stored in a tank 12, from which it is delivered by means of a pumping unit 13. A dosing unit 14 is used to provide the correct urea solution flow rate for injection. An injector 5 is used for introducing the urea solution into the exhaust system. The injector 5 can be of any conventional injector type. A typical injection unit that is suitable for the purpose comprises two coaxial pipes, of which the inner one is for the urea solution and the outer one for compressed air that is mixed with the urea solution in a nozzle to form a fine spray that mixes with the exhaust gas flow.

Because the reducing agent is injected into the high-pressure exhaust duct 7b upstream from the high-pressure turbocharger 2, the mixing duct 7c can be very short. The turbine of the high-pressure turbocharger 2 mixes the reducing agent with the exhaust gas effectively and long exhaust ducts before the catalytic converter 4 are thus not needed.

The embodiment of Fig. 2 differs from the embodiment of Fig. 1 in that the engine 1 is a V-engine. The other bank of the engine 1 is provided with a second exhaust manifold 7a', which connects the cylinders 15' to a second high-pressure exhaust duct 7b'. The exhaust system comprises a second high-pressure turbocharger 2' having a compressor 2a' and a turbine 2b'. The second high-pressure exhaust duct 7b' connects the second exhaust manifold 7a' to the turbine inlet 2c' of the second high-pressure turbocharger 2'. In the embodiment of Fig. 2, the catalytic converter 4 is divided into a first compartment 4a and a second compartment 4a'. Both compartments 4a, 4a' are provided with an inlet 4b, 4b' and an outlet 4c, 4c'. The turbine outlet 2c of the first high-pressure turbocharger 2 is connected with a first mixing duct 7c to the inlet 4b of the first compartment 4a of the catalytic converter 4. The turbine outlet 2c' of the second high-pressure turbocharger 2' is connected with a second mixing duct 7c' to the inlet 4b' of the second compartment 4a' of the catalytic converter 4. The outlet 4b of the first compartment 4a of the catalytic converter 4 is connected with a first low-pressure exhaust duct 7d to the turbine inlet 3c of a first low-pressure turbocharger 3. The outlet 4c' of the second compartment 4a' of the catalytic converter 4 is connected with a second low-pressure exhaust duct 7d' to the turbine inlet 3c' of a second low-pressure turbocharger 3'.

The engine 1 in the embodiment of Fig. 2 is also provided with a second low-pressure charge air cooler 8' and a second low-pressure charge air cooler 9'. The first and second exhaust manifolds 7a, 7a' are connected with a common wastegate 10 to the first and second mixing ducts 7c, 7c'. The second exhaust manifold 7a' is provided with a second injector 5' for introducing the reducing agent into the exhaust system.

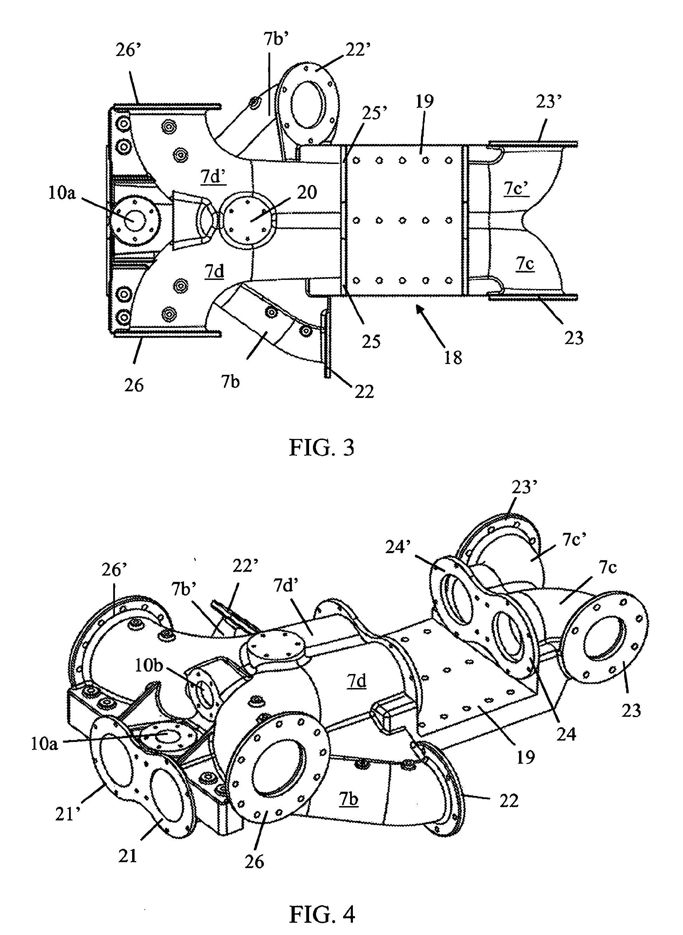

According to an embodiment of the invention, part of the exhaust system can be arranged in an exhaust module 18, as shown in Figs. 3 and 4. The exhaust module 18 comprises the first and second high-pressure exhaust ducts 7b, 7b', the first and second mixing ducts 7c, 7c' and the first and second low-pressure exhaust ducts 7d, 7d'. All the ducts 7b, 6b', 7c, 7c', 7d, 7d' are integrated into a single module. The exhaust module is also provided with a base 19 for the catalytic converter 4. The exhaust module 18 can be manufactured as a one-piece cast or it can be made of several parts that are for instance welded together.

Flanges 21, 21' are arranged at the first ends of the high-pressure exhaust ducts 7b, 7b' for connecting the high-pressure exhaust ducts 7b, 7b' to the exhaust manifolds 7a, 7a' of the engine 1. The turbine inlets 2c, 2c' of the high-pressure turbochargers 2, 2' are connected to the flanges 22, 22' at the second ends of the high-pressure exhaust ducts 7b, 7b'. The turbine outlets 2d, 2d' of the high-pressure turbochargers 2, 2' are connected to the flanges 23, 23' at the first ends of the mixing ducts 7c, 7c'. Inlets 4b, 4b' of the catalytic converter 4 are connected to the flanges 24, 24' at the second ends of the mixing ducts 7c, 7c'. Outlets 4c, 4c' of the catalytic converter 4 are connected to the flanges 24, 24' at the first ends of the low-pressure exhaust ducts 7d, 7d'. The turbine inlets 3c, 3c' of the low-pressure turbochargers 3, 3' are connected to the flanges 25, 25' at the second ends of the low-pressure exhaust ducts 7d, 7d'.

The exhaust module 18 also comprises a wastegate outlet 10a from the high-pressure exhaust ducts 7b, 7b'. There is also provided a wastegate inlet 10b into the low-pressure exhaust ducts 7d, 7d'. The wastegate 10 can be arranged between the wastegate outlet 10a and the wastegate inlet 10b for guiding part of the exhaust gas past the high-pressure turbochargers 2, 2'. A second wastegate outlet 20 is arranged on the upper surface of the exhaust module 18. A second wastegate can be connected to the second wastegate outlet 20 so that exhaust gases can be guided past the low-pressure turbochargers 3, 3'.

Many variations of the present invention are possible within the scope of the appended claims. For instance, it is possible to use a single compartment catalytic converter also with a V-engine. It is also possible to arrange separate catalytic converters for both banks of the engine.

## Claims

1. An exhaust system for an internal combustion engine (1), which exhaust system comprises
- a high-pressure turbocharger (2) comprising a turbine (2b),
- a low-pressure turbocharger (3) comprising a turbine (3b) being arranged downstream from the turbine (2b) of the high-pressure turbocharger (2) with respect to the direction of the exhaust gas flow,
- means (7a, 7b) for connecting the turbine inlet (2c) of the high-pressure turbocharger (2) to a group of cylinders (15) of the engine (1),
- a catalytic converter (4) for selective catalytic reduction, and
- means (5) for introducing reducing agent into the exhaust system,
**characterized in that**
the exhaust system further comprises
- means (7c) for connecting the turbine outlet (2c) of the high-pressure turbocharger (2) to an inlet (4b) of the catalytic converter (4), and
- means (7d) for connecting an outlet (4c) of the catalytic converter (4) to the turbine inlet (3c) of the low-pressure turbocharger (3),
and that the means (5) for introducing reducing agent into the exhaust system are arranged upstream from the turbine (2b) of the high-pressure turbocharger (2).

2. An exhaust system according to claim 1, **characterized in that** the system comprises
- a second high-pressure turbocharger (2') comprising a turbine (2b'),
- a second low-pressure turbocharger (3') comprising a turbine (3b') being arranged downstream from the turbine (2b') of the second high-pressure turbocharger (2') with respect to the direction of the exhaust gas flow,
- means (7a', 7b') for connecting the turbine inlet (2c') of the second high-pressure turbocharger (2') to a second group of cylinders (15') of the engine (1),
- means (7c') for connecting the turbine outlet (2d') of the second high-pressure turbocharger (2') to an inlet (4b') of a catalytic converter (4),
- means (7d') for connecting an outlet (4c') of the catalytic converter (4) to the turbine inlet (3c') of the second low-pressure turbocharger (3'), and
- second means (5') for introducing reducing agent into the exhaust system upstream from the turbine (2b') of the second high-pressure turbocharger (2').

3. An exhaust system according to claim 1 or 2, **characterized in that** the system comprises an exhaust module (18) comprising
- a high-pressure exhaust duct (7b) for connecting an exhaust manifold (7a) of the engine (1) to the turbine inlet (2c) of the high-pressure turbocharger (2),
- a mixing duct (7c) for connecting the turbine outlet (2d) of the high-pressure turbocharger (2) to an inlet (4b) of the catalytic converter (4), and
- a low-pressure exhaust duct (7d) for connecting an outlet (4c) of the catalytic converter (4) to the turbine inlet (3c) of the low-pressure turbocharger (3),
the ducts (7b, 7c, 7d) of the exhaust module (18) being integral with each other.

4. An exhaust system according to claim 3, **characterized in that** the exhaust module (18) comprises
- a second high-pressure exhaust duct (7b') for connecting a second exhaust manifold (7a') of the engine (1) to the turbine inlet (2c') of a second high-pressure turbocharger (2'),
- a second mixing duct (7c') for connecting the turbine outlet (2d') of a second high-pressure turbocharger (2') to an inlet (4b') of a catalytic converter (4), and
- a second low-pressure exhaust duct (7d') for connecting an outlet (4c') of the catalytic converter (4) to the turbine inlet (3c') of a second low-pressure turbocharger (3').

5. An exhaust system according to claim 3 or 4, **characterized in that** the exhaust module (18) is a one-piece cast.

6. An exhaust system according to any of claims 3-5, **characterized in that** the means (5, 5') for introducing reducing agent into the exhaust system are arranged in the exhaust module (18).

7. A method for selective catalytic reduction in an exhaust system of an internal combustion engine (1), which exhaust system comprises
- a high-pressure turbocharger (2) comprising a turbine (2b), and
- a low-pressure turbocharger (3) comprising a turbine (3b) being arranged downstream from the turbine (2b) of the high-pressure turbocharger (2) with respect to the direction of the exhaust gas flow,
**characterized in that**
- the reducing agent is introduced into the system upstream from the turbine (2b) of the high-pressure turbocharger (2), and
- the selective catalytic reduction takes place downstream from the turbine (2b) of the high-pressure turbocharger (2) and upstream from the turbine (3b) of the low-pressure turbocharger (3).

## Patentansprüche

1. Abgasanlage für eine Verbrennungskraftmaschine (1), wobei die Abgasanlage Folgendes umfasst:
- einen Hochdruck-Turbolader (2), der eine Turbine (2b) umfasst,
- einen Niederdruck-Turbolader (3), der eine Turbine (3b) umfasst, die in Bezug auf die Richtung des Abgasstroms stromabwärts von der Turbine (2b) des Hochdruck-Turboladers (2) angeordnet ist,
- Mittel (7a, 7b) zum Verbinden des Turbineneinlasses (2c) des Hochdruck-Turboladers (2) mit einer Gruppe von Zylindern (15) des Motors (1),
- einen Katalysator (4) zur selektiven katalytischen Reduktion und
- Mittel (5) zum Einleiten von Reduktionsmittel in die Abgasanlage,
**dadurch gekennzeichnet, dass**
die Abgasanlage ferner Folgendes umfasst:
- Mittel (7c) zum Verbinden des Turbinenauslasses (2d) des Hochdruck-Turboladers (2) mit einem Einlass (4b) des Katalysators (4) und
- Mittel (7d) zum Verbinden eines Auslasses (4c) des Katalysators (4) mit dem Turbineneinlass (3c) des Niederdruck-Turboladers (3),
und dadurch, dass die Mittel (5) zum Einleiten von Reduktionsmittel in die Abgasanlage stromaufwärts von der Turbine (2b) des Hochdruck-Turboladers (2) angeordnet sind.

2. Abgasanlage nach Anspruch 1, **dadurch gekennzeichnet, dass** die Anlage Folgendes umfasst:
- einen zweiten Hochdruck-Turbolader (2'), der eine Turbine (2b') umfasst,
- einen zweiten Niederdruck-Turbolader (3'), der eine Turbine (3b') umfasst, die in Bezug auf die Richtung des Abgasstroms stromabwärts von der Turbine (2b') des zweiten Hochdruck-Turboladers (2') angeordnet ist,
- Mittel (7a', 7b') zum Verbinden des Turbineneinlasses (2c') des zweiten Hochdruck-Turboladers (2') mit einer zweiten Gruppe von Zylindern (15') des Motors (1),
- Mittel (7c') zum Verbinden des Turbinenauslasses (2d') des zweiten Hochdruck-Turboladers (2') mit einem Einlass (4b') eines Katalysators (4) und
- Mittel (7d') zum Verbinden eines Auslasses (4c') des Katalysators (4) mit dem Turbineneinlass (3c') des zweiten Niederdruck-Turboladers (3') und
- die Mittel (5') zum Einleiten von Reduktionsmittel in die Abgasanlage stromaufwärts von der Turbine (2b') des zweiten Hochdruck-Turboladers (2').

3. Abgasanlage nach Anspruch 1 oder 2, **dadurch gekennzeichnet, dass** die Anlage ein Abgasmodul (18) umfasst, das Folgendes umfasst:
- eine Hochdruck-Abgasleitung (7b) zum Verbinden eines Abgaskrümmers (7a) des Motors (1) mit dem Turbineneinlass (2c) des Hochdruck-Turboladers (2),
- eine Mischleitung (7c) zum Verbinden des Turbinenauslasses (2d) des Hochdruck-Turboladers (2) mit einem Einlass (4b) des Katalysators (4) und
- eine Niederdruck-Abgasleitung (7d) zum Verbinden eines Auslasses (4c) des Katalysators (4) mit dem Turbineneinlass (3c) des Niederdruck-Turboladers (3),
wobei die Leitungen (7b, 7c, 7d) des Abgasmoduls (18) integral miteinander sind.

4. Abgasanlage nach Anspruch 3, **dadurch gekennzeichnet, dass** das Abgasmodul (18) Folgendes umfasst:
- eine zweite Hochdruck-Abgasleitung (7b') zum Verbinden eines zweiten Abgaskrümmers (7a') des Motors (1) mit dem Turbineneinlass (2c') eines zweiten Hochdruck-Turboladers (2'),
- eine zweite Mischleitung (7c') zum Verbinden des Turbinenauslasses (2d') eines zweiten Hochdruck-Turboladers (2') mit einem Einlass (4b') eines Katalysators (4) und
- eine zweite Niederdruck-Abgasleitung (7d') zum Verbinden eines Auslasses (4c') des Katalysators (4) mit dem Turbineneinlass (3c') eines zweiten Niederdruck-Turboladers (3').

5. Abgasanlage nach Anspruch 3 oder 4, **dadurch gekennzeichnet, dass** das Abgasmodul (18) ein einteiliges Gussteil ist.

6. Abgasanlage nach einem der Ansprüche 3 bis 5, **dadurch gekennzeichnet, dass** die Mittel (5, 5') zum Einleiten von Reduktionsmittel in die Abgasanlage in dem Abgasmodul (18) angeordnet sind.

7. Verfahren zur selektiven katalytischen Reduktion in einer Abgasanlage einer Verbrennungskraftmaschine (1), wobei die Abgasanlage Folgendes umfasst:
- einen Hochdruck-Turbolader (2), der eine Turbine (2b) umfasst,
- einen Niederdruck-Turbolader (3), der eine Turbine (3b) umfasst, die in Bezug auf die Richtung des Abgasstroms stromabwärts von der Turbine (2b) des Hochdruck-Turboladers (2) angeordnet ist,
**dadurch gekennzeichnet, dass**
- das Reduktionsmittel stromaufwärts von der Turbine (2b) des Hochdruckturboladers (2) in die Anlage eingeleitet wird und
- die selektive katalytische Reduktion stromabwärts von der Turbine (2b) des Hochdruckturboladers (2) stromaufwärts von der Turbine (3b) des Niederdruckturboladers (3) stattfindet.

## Revendications

1. Système d'échappement pour un moteur à combustion interne (1), lequel système d'échappement comprend
- un turbocompresseur à haute pression (2) comprenant une turbine (2b)
- un turbocompresseur à basse pression (3) comprenant une turbine (3b) étant disposé en aval de la turbine (2b) du turbocompresseur à haute pression (2) eu égard à la direction de l'écoulement des gaz d'échappement,
- des moyens (7a, 7b) pour raccorder l'entrée de turbine (2c) du turbocompresseur à haute pression (2) à un groupe de cylindres (15) du moteur (1),
- un convertisseur catalytique (4) pour la réduction catalytique sélective, et
- un moyen (5) pour introduire un agent réducteur dans le système d'échappement
**caractérisé en ce que**
le système d'échappement comprend en plus
- un moyen (7c) pour raccorder la sortie de turbine (2c) du turbocompresseur à haute pression (2) à une entrée (4b) du convertisseur catalytique (4), et
- un moyen (7d) pour raccorder une sortie (4c) du convertisseur catalytique (4) à l'entrée de turbine (3c) du turbocompresseur à basse pression (3),
et **en ce que** le moyen (5) pour introduire un agent réducteur dans le système d'échappement est disposé en amont de la turbine (2b) du turbocompresseur à haute pression (2).

2. Système d'échappement selon la revendication 1 **caractérisé en ce que** le système comprend
- un deuxième turbocompresseur à haute pression (2') comprenant une turbine (2b'),
- un deuxième turbocompresseur à basse pression (3') comprenant une turbine (3b') étant disposé en aval de la turbine (2b') du deuxième turbocompresseur à haute pression (2') eu égard à la direction de l'écoulement eds gaz d'échappement,
- des moyens (7a', 7b') pour raccorder l'entrée de turbine (2c') du deuxième turbocompresseur à haute pression (2') à un deuxième groupe de cylindres (15') du moteur (1),
- un moyen (7c') pour raccorder la sortie de turbine (2d') du deuxième turbocompresseur à haute pression (2') à une entrée (4b') d'un convertisseur catalytique (4),
- un moyen (7d') pour raccorder une sortie (4c') du convertisseur catalytique (4) à l'entrée de turbine (3c') du deuxième turbocompresseur à basse pression (3'), et
- un deuxième moyen (5') pour introduire un agent réducteur dans le système d'échappement en aval de la turbine (2b') du deuxième turbocompresseur à haute pression (2').

3. Système d'échappement selon la revendication 1 ou 2 **caractérisé en ce que** le système comprend un module d'échappement (18) comprenant
- un conduit d'échappement haute pression (7b) pour raccorder un collecteur d'échappement (7a) du moteur (1) à l'entrée de turbine (2c) du turbocompresseur à haute pression (2),
- un conduit de mélange (7c) pour raccorder la sortie de turbine (2d) du turbocompresseur à haute pression (2) à une entrée (4b) du convertisseur catalytique (4), et
- un conduit d'échappement à basse pression (7d) pour raccorder une sortie (4c) du convertisseur catalytique (4) à l'entrée de turbine (3c) du turbocompresseur à basse pression (3),
les conduits (7b, 7c, 7d) du module d'échappement (18) constituant une partie intégrante l'un avec l'autre.

4. Système d'échappement selon la revendication 3 **caractérisé en ce que** le module d'écappement (18) comprend
- un deuxième conduit d'échappement haute pression (7b') pour raccorder un deuxième collecteur d'échappement (7a') du moteur (1) à l'entrée de turbine (2c') d'un deuxième turbocompresseur à haute pression (2'),
- un deuxième conduit de mélange (7c') pour raccorder la sortie de turbine (2d') d'un deuxième turbocompresseur à haute pression (2') à une entrée (4b') d'un convertisseur catalytique (4), et
- un deuxième conduit d'échappement à basse pression (7d') pour raccorder une sortie (4c') du convertisseur catalytique (4) à l'entrée de la turbine (3c') d'un deuxième turbocompresseur à basse pression (3').

5. Système d'échappement selon la revendication 3 ou 4 **caractérisé en ce que** le module d'échappement (18) est un moulage d'une pièce.

6. Un système d'échappement selon l'une quelconque des revendications 3-5 **caractérisé en ce que** les moyens (5-5') pour introduire un agent réducteur dans le système d'échappement sont disposés dans le module d'échappement (18).

7. Méthode pour la réduction catalytique sélective dans un système d'échappement d'un moteur à combustion interne (1), lequel système d'échappement comprend
- un turbocompresseur à haute pression (2) comprenant une turbine (2b), et
- un turbocompresseur à basse pression (3) comprenant une turbine (3b) étant disposé en aval de la turbine (2b) du turbocompresseur à haute pression (2) eu égard à la direction de l'écoulement des gaz d'échappement,
**caractérisée en ce que**
- l'agent réducteur est introduit dans le système en amont de la turbine (2b) du turbocompresseur à haute pression (2), et
- la réduction catalytique sélective a lieu en aval de la turbine (2b) du turbocompresseur à haute pression (2) et en aval de la turbine (3b) du turbocompresseur à basse pression (3).
